# EUROPEAN PATENT SPECIFICATION

(11) **EP 1 959 030 B1**
(45) Date of publication and mention of the grant of the patent: **30.10.2013**
(21) Application number: 06768258.3
(22) Date of filing: 14.07.2006
(51) Int. Cl.: C08K 3/08, C08L 63/00, C08L 79/00, C09D 5/08, C09D 7/12, C09D 175/04, C08L 75/04, C23C 2/26, C23C 26/00

(54) **AQUEOUS SURFACE-TREATING AGENT FOR METAL MATERIAL AND SURFACE-COATED METAL MATERIAL**
WÄSSRIGES OBERFLÄCHENBEHANDLUNGSMITTEL FÜR METALLMATERIAL UND OBERFLÄCHENBESCHICHTETES METALLMATERIAL
AGENT DE TRAITEMENT DE SURFACE AQUEUX POUR MATERIAU METALLIQUE ET MATERIAU METALLIQUE A REVETEMENT DE SURFACE

(30) Priority: 17.08.2005 JP 2005236949
(43) Date of publication of application: 20.08.2008
(73) Proprietor: NIHON PARKERIZING CO., LTD., Chuo-ku, Tokyo 103-0027 (JP)
(72) Inventor: SHIRAI, Gen, Tokyo 103-0027 (JP)
(74) Representative: Dossmann, Gérard
(86) International application number: PCT/JP2006/314099
(87) International publication number: WO 2007/020762

(56) References cited:
- JP-A- 2001 081 392
- JP-A- 2004 204 333
- JP-A- 2005 298 837
- JP-A- 2006 152 435
- JP-A- 2006 152 436

## Description

### Technical Field

This invention relates to an aqueous surface-treating agent not containing chromium for giving formability withstanding severe forming such as roll forming or drawing and ironing; and corrosion resistance, chemical resistance, etc. necessary for maintaining quality for a long term under an use environment to metallic materials, particularly aluminum sheets, aluminum-zinc alloy-plated steel sheets, etc. used in the fields of building materials, household electrical appliances, cars, etc., and a metallic material whose surface is coated with the surface-treating agent.

### Background Art

Aluminum sheets and aluminum-zinc alloy-plated steel sheets are excellent in corrosion resistance because a dense aluminum oxide layer exists on the surface. Utilizing the characteristic, these materials are often used without coating in building material products such as roof materials and external wall materials of buildings and props in agricultural vinyl houses; products for civil work such as guardrails, sound insulating walls and drainage ditches; household electrical appliances; industrial instruments; vessels for eating and drinking; etc. Therefore, they are required to be free from discoloration of the surfaces and capable of maintaining fine surface appearance for a long term. Among them, taking aluminum sheets as an example, drawing and ironing working is made to produce articles formed into cup-shapes such as vessels for eating and drinking, and cases for general business. Further, taking aluminum-containing zinc-plated steel sheets as an example, roll forming is made in part of uses for building materials. In the latter, the applied aluminum-containing zinc is required not to pile up on the rolls during the forming. Further, the appearance after the roll forming is also important, and it is preferred that the resulting products have no damage on the surfaces and are excellent in corrosion resistance. Further, in the case of uses for building materials, there is a case where a cleaner liquid used to remove the coolant (auxiliary oil at the forming) used at the forming is strongly alkaline or where the products obtained by the forming are placed under contact with concrete or under a strongly alkaline corrosion environment as in internal walls of sheds for livestock, but, even in the case, it is needed that the surfaces of the plated steel sheets are not discolored and fine appearances are maintained over a long term. Further, aluminum has a property to be discolored blackly in an atmosphere of high temperature and high humidity, and moisture resistance to prevent it is important in view of design.

As prior arts to improve the above problems, many arts to apply a resin coating containing hexavalent chromium are proposed. As a specific example thereof, there is a process described in Patent Document 1. Patent Document 1 discloses a treating process aiming at enhancement of roll forming properties and corrosion resistance which comprises applying an aqueous treating liquid onto the surface of an aluminum-zinc alloy-plated steel sheet, said aqueous treating liquid being prepared by compounding hexavalent chromium ions into a specific water soluble or water dispersible resin in a specific proportion and adjusting the pH to 3 to 10. The aluminum-zinc alloy-plated steel sheet subjected to surface treatment with hexavalent chromium ions contained are excellent in corrosion resistance, particularly corrosion resistance at the formed part. However, since hexavalent chromium ions have a disadvantage to directly badly influence human bodies, and, in a rise of awareness on preservation of environments in recent years, use of chromate treatment is apt to be avoided. Further, drainage containing hexavalent chromium ions needs to be subjected to a special treatment prescribed in the Water Pollution Control Law, which is a cause of considerable cost up as a whole. Further, when became chrome-containing industrial wastes, chromate-treated metallic materials have a large drawback to be incapable of being recycled, which is a social problem. Further, there exists also a problem that there is a possibility that elution of hexavalent chromium ions from coatings containing hexavalent chromium ions, particularly hexavalent chromium ions from parts of coatings damaged at the time of forming, etc. occurs.

Thus, arts not to use hexavalent chromium ions have been developed. As one of such arts, Patent Document 2 proposes, for the purpose of enhancement of formability, corrosion resistance, paint adhesion, etc. of aluminum-zinc alloy-plated steel sheets, an aqueous resin composition wherein an anionic urethane resin having a glass transition temperature of 50°C or less, a zirconium compound and a silane coupling agent are compounded, and a coating process.
However, further higher quality has come to be demanded on metallic materials in recent years, and sufficient performance has not been obtained on corrosion resistance over long term use, severe formability withstanding continuous forming, chemical resistance at contact with an alkali or an acid, and further, moisture resistance to prevent discoloration to black or brown when metallic materials are left alone in an atmosphere of high temperature and high humidity.

Namely, it is the present state of things that an aqueous surface-treating agent capable of forming a coating excellent in corrosion resistance, formability, chemical resistance (alkali resistance and/or acid resistance) and moisture resistance by treatment to form a coating layer composed of only one layer (single stage treatment), and not containing hexavalent chromium ions has not been developed.
Patent Document 1: JP-B-2097278
Patent Document 2: JP-A-2004-204333

### DISCLOSURE OF INVENTION

### PROBLEMS TO BE SOLVED BY THE INVENTION

This invention is for solving the problems which prior arts have, and aims to provide an aqueous surface-treating agent for metallic materials capable of forming a coating excellent in corrosion resistance, formability, chemical resistance and moisture resistance, and not containing chromium; and a metallic material having a coating formed using the surface-treating agent and excellent in corrosion resistance, formability, chemical resistance and moisture resistance.

### MEANS FOR SOLVING THE PROBLEMS

The present inventors have intensely studied on means for solving the problems which the prior arts have, and, as a result, have found that the problems can be solved by forming a coating layer containing an urethane resin having specific physical properties as a main ingredient on the surface of an aluminum sheet, an aluminum-zinc alloy-plated steel sheet or the like, and have completed this invention.
Namely, this invention relates to an aqueous surface-treating agent for metallic materials wherein (A) a water dispersible urethane resin having a glass transition temperature of more than 50°C and a minimal film-forming temperature of 40°C or less; (B) at least one organic compound selected from methylolated phenols and their condensates, carbodiimide resins, epoxy resins, silane coupling agents, organic phosphonic acids and their partial alkali metal or ammonium salts or their partial esters with alkanols having 1 to 4 carbon atoms, organic phosphinic acids, phosphoric esters of polyols, amine compounds, isocyanate compounds, aldehyde compunds, carboxylic acids, amino resins and urethane prepolymers whose isocyanato groups are protected by addition reacting an alkali metal bisulfite thereto; and (C) a zirconium compound are compounded in water. This invention also relates to a surface-coated metallic material obtained by applying the aqueous surface-treating agent onto at least one surface of a metallic material and drying it to form a coating of 0.5 to 3 g/m² as dry coating mass.

### EFFECT OF THE INVENTION

A metallic material such as an aluminum sheet or an aluminum-zinc alloy-plated steel sheet obtained by applying the aqueous surface-treating agent for metallic materials of the invention onto the surface and drying it is excellent in corrosion resistance, formability, chemical resistance and moisture resistance, and at the same time, overcomes environmental problems. Therefore, the invention has an extremely large industrial utilization value.

### BEST MODE FOR CARRYING OUT THE INVENTION

The urethane resin (A) compounded in the aqueous surface-treating agent for metallic materials of the invention plays a role to give formability, corrosion resistance, chemical resistance and moisture resistance to a metallic material which is a material to be treated or enhance them, above all, a role to give or enhance formability.
The urethane resin (A) compounded in the aqueous surface-treating agent for metallic materials of the invention is an urethane resin having a glass transition temperature (Tg) of more than 50°C and a minimal film-forming temperature of 40°C or less. The glass transition temperature is a temperature at which the resin changes from a glass state to a rubber state. Basically, it is often a case that when a resin having a high glass transition temperature is used, excellent corrosion resistance and chemical resistance are obtained. However, when a glass transition temperature is high, there arises a problem that since baking at a temperature fairly higher than the glass transition temperature is needed, energy cost gets high. Further, when the glass transition temperature is high, a resulting coating tends to get hard and formability tends to be inferior. Thus, in the invention, the urethane resin (A) used was designed to have a glass transition temperature exceeding 50°C but a minimal film-forming temperature of 40°C or less so that excellent corrosion resistance, formability, chemical resistance, etc. could be displayed in both of a case where the baking temperature exceeds the glass transition temperature and a case where it is equal to or lower than the glass transition temperature. Further, an optional design was taken to make, as the physical properties of a coating of the urethane resin (A), tensile strength and elongation 40 to 90 N/mm² and 50 to 500 %, respectively so that a tougher and more stretchable coating could be formed.

In the case where the glass transition temperature of the urethane resin (A) is 50°C or less, when a coated material is put in an atmosphere of high temperature and high humidity, the coating is softened and thus water vapor becomes easy to get in, and moisture resistance tends to be lowered. The glass transition temperature of the urethane resin (A) is preferably in the range of 80 to 150°C, and more preferably in the range of 100 to 130°C. When it exceeds 150°C, the resulting coating becomes too hard, and there arises a tendency that adhesion with the metallic material is lowered, and, since the coating becomes hard to follow at forming, formability is lowered.
When the minimal film forming temperature of the urethane resin (A) exceeds 40°C, there arises a tendency that the formability and chemical resistance of the resulting coating are lowered. The minimal film-forming temperature of the urethane resin (A) is preferably 20°C or less, more preferably 5°C or less and still more preferably 0°C or less. As to the lower limit of the minimal film-forming temperature, there is no particular restriction.

In order to make the urethane resin (A) water dispersible and, further, in view of physical properties of a coating formed from the urethane resin (A), the acid value of the urethane resin (A) is preferably in the range of 15 to 40 and more preferably in the range of 20 to 30. When the acid value is in the range of 15 to 40, adhesion with the metallic material, corrosion resistance and chemical resistance are further enhanced.

Further, as physical properties of a coating formed from the urethane resin (A), it is preferred that tensile strength is in the range of 40 to 90 N/mm² and elongation is in the range of 50 to 500 %. The tensile strength is more preferably in the range of 50 to 80 N/mm² and the elongation is more preferably in the range of 150 to 400 %. When the tensile strength and the elongation meet the above ranges, coating following properties and formability are further enhanced.

There is no particular restriction on the molecular weight of the urethane resin (A), but, in the case where its measurement is made by gel permeation chromatography, it is preferably on the order of 10,000 to 1,000,000 and more preferably on the order of 50,000 to 500,000.

The urethane resin (A) can be obtained according to a general synthetic method using a polyisocyanate (particularly diisocyanate), a polyol (particularly diol), a carboxylic acid having two or more, preferably two hydroxyl groups or a reactive derivative thereof, and a polyamine (particularly diamine) as starting materials. More specifically, without being interpreted limitedly, the urethane resin (A) can, for example, be obtained by preparing an urethane prepolymer having isocyanato groups at both ends from a diisocyanate and a diol, reacting with this a carboxylic acid having two hydroxyl groups or a reactive derivative thereof to form a derivative having isocyanato groups at both ends, adding thereto a triethanolamine or the like to form an ionomer (triethanolamine salt), adding thereto water to form an emulsion, and then adding a diamine to carry out chain extension.

As the polyisocyanate used in the production of the urethane resin (A), there are aliphatic, alicyclic and aromatic polyisocyanates, and any of them can be used. Specifically, there can be mentioned tetramethylene diisocyanate, hexamethylene diisocyanate, lysine diisocyanate, hydrogenated xylylene diisocyanate, 1,4-cyclohexylene diisocyanate, 4,4'-dicyclohexylmethane diisocyanate, 2,4'-dicyclohexylmethane diisocyanate, isophorone diisocyanate, 3,3'-dimethoxy-4,4'-biphenylene diisocyanate, 1,5-naphthalene diisocyanate, 1,5-tetrahydronaphthalene diisocyanate, 2,4-tolylene diisocyanate, 2,6-tolylene diisocyanate, 4,4'-diphenylmethane diisocyanate, 2,4'-diphenylmethane diisocyanate, phenylene diisocyanate, xylylene diisocyanate, tetramethylxylylene diisocyanate, etc. Among them, aliphatic and alicyclic polyisocyanates such as tetramethylene diisocyanate, hexamethylene diisocyanate, lysine diisocyanate, hydrgenated xylylene diisocyanate, 1,4-cyclohexylene diisocyanate, 4,4'-dicyclohexylmethane diisocyanate, 2,4'-dicyclohexylmethane diisocyanate and isophorone diisocyanate are preferred because when they are used, coatings excellent in not only chemical resistance, corrosion resistance, etc. but weather resistance can be obtained.

As the polyol used in preparation of the urethane resin (A), there are polyester polyols, polyether polyols, etc., and any of them can be used, but, polyester polyols are particularly preferred in the invention.
As the polyester polyol, there can be mentioned a polyester polyol obtained by subjecting a glycol and a dicarboxylic acid or a reactive derivative thereof (an acid anhydride or the like) to dehydration and condensation reaction; a polyester polyol obtained by subjecting a cyclic ester compound such as ε-caprolactone to ring opening polymerization using a polyhydric alcohol as an initiator; etc.

As the glycol used in preparation of the polyester polyol, there can, for example, be mentioned ethylene glycol, propylene glycol, 1,3-propanediol, 1,4-butanediol, 1,5-pentanediol, 3-methyl-1,5-pentanediol, 1,6-hexanediol, neopentyl glycol, butylethylpropanediol, diethylene glycol, triethylene glycol, tetraethylene glycol, polyethylene glycol (molecular weight 300 to 6,000), dipropylene glycol, tripropylene glycol, bis(hydroxyethoxy)benzene, 1,4-cyclohexanediol, 1,4-cyclohexanedimethanol, bisphenol A, hydrogenated bisphenol A, hydroquinone, etc.

As the dicarboxylic acid or a reactive derivative thereof used in preparation of the polyester polyol, there can, for example, be mentioned succinic acid, adipic acid, azelaic acid, sebacic acid, dodecanedicarboxylic acid, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid and acid anhydrides of these dicarboxylic acids, etc.

The carboxylic acid having two or more, preferably two hydroxyl groups or a reactive derivative thereof used in preparation of the urethane resin (A) is used for introducing an acidic group into the urethane resin (A) and for making the urethane resin (A) water dispersible. As the carboxylic acid having two or more, preferably two hydroxyl groups, there can be exemplified dimethylolalkanoic acids such as dimethylolpropionic acid, dimethylolbutanoic acid, dimethylolpentanoic acid and dimethylolhexanoic acid. As the reactive derivative, acid anhydrides thereof, etc. can be mentioned. By making the urethane resin (A) self-water dispersible like this and not using an emulsifier or making its use amount as small as possible, a coating excellent in water resistance can be obtained.

As the polyamine used in preparation of the urethane resin (A), there can, for example, be mentioned hydrazine, ethylenediamine, propylenediamine, 1,6-hexanediamine, tetramethylenediamine, isophoronediamine, xylylenediamine, piperazine, 1,1'-bicyclohexane-4,4'-diamine, diphenylmethanediamine, ethyltolylenediamine, diethylenetriamine, dipropylenetriamine, triethylenetetramine, tetraethylenepentamine, etc.

The urethane resin (A) of the invention can be one silane-modified using a silane coupling agent at the stage of synthesis. There is no particular restriction on the kind of the silane coupling agent and the degree of the modifying at the silane modifying. As the silane coupling agent, there can be used the same coupling agents as ones included in the later-described organic compound (B). By silane modifying, adhesion of the urethane resin (A) with metallic materials is enhanced and the chemical resistance of the urethane resin (A) is enhanced.

In synthesis of the urethane resin (A) of the invention, it is preferred to compound a coating-forming auxiliary agent for enhancing the stability of the resin at the time of synthesis thereof and coating formability when the surrounding environment at the time of coating formation is under low temperature and drying. As the coating-forming auxiliary agent, there can be mentioned butylcellosolve, N-methyl-2-pyrrolidone, butylcarbitol, texanol, etc., and N-methyl-2-pyrrolidone is particularly preferred.

The organic compound (B), as compounded in the aqueous surface-treating agent of the invention, which is at least one selected from methylolated phenols and their condensates, carbodiimide resins, epoxy resins, silane coupling agents, organic phosphonic acids and their partial alkali metal or ammonium salts or their partial esters with alkanols having 1 to 4 carbon atoms, organic phosphinic acids, phosphoric esters of polyols, amine compounds, isocyanate compounds, aldehyde compunds, carboxylic acids, amino resins and urethane prepolymers having carbamoyl group(s) or sulfonic acid group(s) (-SO₃H) (blocked isocyanates), bears a role of enhancing corrosion resistance, chemical resistance and moisture resistance of a coating formed.

The methylolated phenols and condensate thereof in the organic compound (B) are resols obtained by reacting phenol with formaline in the presence of a basic catalyst (sodium hydroxide, ammonia water or the like) and a mixture containing mononucleic to trinucleic bodies as main ingredients.

The carbodiimide resin in the organic compound (B) is a polymer having -N=C=N- groups in the molecule, and can, for example, be prepared by decarboxylation and condensation reaction of a diisocyanate in the presence of a carbodiimidizing catalyst. As the carbodiimidizing catalyst, there can be mentioned tin, magnesium oxide, a combination of potassium ion and 18-crown-6, etc. As the diisocyanate, there can be exemplified diisocyantes among polyisocyanates exemplified as ones used in preparation of the urethane resin (A).

The carbodiimide equivalent of the carbodiimide resin (the chemical formula weight of the carbodiimide resin per one carbodiimido group, in other words, a value obtained by dividing the molecular weight of the carbodiimide resin by the number of carbodiimido groups contained in the carbodiimide resin) is not particularly restricted, but is preferably in the range of 100 to 1,000.

As the epoxy resin in the organic compound (B), there can be used an epoxy resin having bisphenol A or F as an unit in the skeleton, and an epoxy resin wherein part or all of the glycidyl groups are silane- modified or modified with a phosphoric acid is used more preferably.
As the epoxy resin having bisphenol A or F as an unit in the skeleton, there can be mentioned an epoxy resin obtained by repeating dehydrochlorination and addition reaction between epichlorohydrin and bisphenol A or F, and an epoxy resin obtained by repeating addition reaction between an epoxy compound having two or more, preferably two glycidyl groups and bisphenol A or F. Herein, as the epoxy compound, there can, for example, be mentioned sorbitol polyglycidyl ether, polyglycerol polyglycidyl ether, pentaerythritol polyglycidyl ether, diglycerol polyglycidyl ether, trimethylolpropylene polyglycidyl ether, polyethylene glycol diglycidyl ether, polypropylene glycol diglycidyl ether, etc.

Silane modifying of the epoxy resin having bisphenol A or F as an unit in the skeleton can be made in the same manner as in the modifying of the above urethane resin (A). By the silane modifying, there arises an effect that adhesion between a coating formed and the metallic material is enhanced and/or the chemical resistance of the epoxy resin itself are enhanced. Modifying with a phosphoric acid of the epoxy resin having bisphenol A or F as an unit in the skeleton can be made by reacting the epoxy resin with a phosphoric acid or an ester thereof. As the phosphoric acid, there can be used metaphosphoric acid, phosphonic acids, orthophosphoric acid, pyrophosphoric acid, etc. As the ester of the phosphoric acid, there can be used monoesters of metaphosphoric acid, phosphonic acids, orthophosphoric acid, pyrophosphoric acid and the like, for example monomethyl phosphate, monooctyl phosphate, monophenyl phosphate, etc. It is preferred that the phosphoric acid- modified epoxy resin is neutralized with an amine compound because a stabler water dispersible resin composition is formed thereby. As the amine compound, there can, for example, be mentioned ammonia; alkanolamines such as dimethanolamine and triethanolamine; alkylamines such as diethylamine and triethylamine; alkylalkanolamines such as dimethylethanolamine; etc. By modifying with a phosphoric acid, there arises an effect that adhesion between a coating formed and the metallic material is enhanced.

The degree of the silane modifying or phosphoric acid modifying is not particularly restricted so long as it is such a degree that an effect by such modifying can be recognized or a further degree, but, usually, is preferably such a degree that the Si-OH equivalent or P-OH equivalent becomes in the range of 150 to 1,000, and more preferably such a degree that it becomes in the range of 300 to 800.

The epoxy equivalent of the epoxy resin (the chemical formula weight of the epoxy resin per one epoxy group, in other words, a value obtained by dividing the molecular weight of the epoxy resin by the number of epoxy groups contained in the epoxy resin) in the organic compound (B) is not particularly restricted, but is preferably in the range of 100 to 3,000.

As the silane coupling agent in the organic compound (B), there can be mentioned vinyltrichlorosilane, vinyltris(2-methoxyethoxy)silane, vinyltriethoxysilane, vinyltrimethoxysilane, 3-methacryloyloxypropyltrimethoxysilane, 2-(3,4-epoxycyclohexyl)ethyltrimethoxysilane, 3-glycidyloxypropyltrimethoxysilane, 3-glycidyloxypropyltriethoxysilane, 3-glycidyloxypropylmethyldiethoxysilane, N-(2-aminoethyl)-3-aminopropyltrimethoxysilane, N-(2-aminoethyl)-3-aminopropylmethyldimethoxysilane, 3-aminopropyltrimethoxysilane, 3-aminopropyltriethoxysilane, N-phenyl-3-aminopropyltrimethoxysilane, 3-mercaptopropyltrimethoxysilane, 3-chloropropyltrimethoxysilane, ureidopropyltriethoxysilane, etc.

As the organic phosphonic acid in the organic compound (B), there can be mentioned aminotri(methylenephosphonic acid), 1-hydroxyethane-1,1-diphosphonic acid, ethylenediamine-N,N,N',N'-tetra(methylenephosphonic acid), hexamethylenediamine-N,N,N',N'-tetra(methylenephosphonic acid), diethylenetriamine-N,N,N',N",N"-penta(methylenephosphonic acid), 2-phosphonobutane-1,2,4-tricarboxylic acid, an alkanephosphonic acid having 1 to 4 carbon atoms, an alkanephosphonmonoamide having 1 to 4 carbon atoms, an alkanephosphonyl monocyanide having 1 to 4 carbon atoms, etc. When such an organic phosphonic acid has two or more phosphonic acid groups, partial alkali metal salts or ammonium salts thereof or partial esters thereof with alkanols having 1 to 4 carbon atoms can also be used.
As the organic phosphinic acid in the organic compound (B), there can be mentioned an alkanephosphinic acid having 1 to 4 carbon atoms, an alkanemonothiophosphinic acid having 1 to 4 carbon atoms (R-PH(=S)OH), etc.
As the phosphoric ester of a polyol in the organic compound (B), there can be mentioned inositol hexaphosphate ester, etc.

As the amine compounds in the organic compound (B), there can be used melamine compounds, guanamine compounds, guanidine compounds, etc. There can be mentioned melamine, methylolated melamines, methyl ethers of methylolated melamines, etc. as the melamine compounds; benzoguanamine, etc. as the guanamine compounds; 1,3-diphenylguanidine, di-o-tolylguanidine, guanidine carbonate, etc. as the guanidine compounds. As the amine compounds, there can further be used allylamine, aniline, polyanilines, dicyandiamide, etc. In the above, the methylolated melamines are compounds represented by the following structural formula (1) wherein R¹ to R⁶ independently represent hydrogen atoms or methylol groups, but at least one of R¹ to R⁶ is a methylol group or mixtures of any two kinds or more of these compounds; and the methyl ethers of methylolated melamines are compounds wherein the hydroxyl group of at least one methylol group of methylolated melamines is O-methylated or mixtures of any two kinds or more of these compounds. The polyanilines are represented by the following structural formula (2).

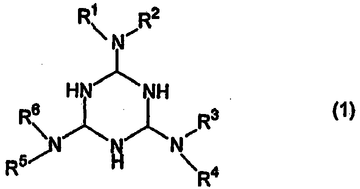

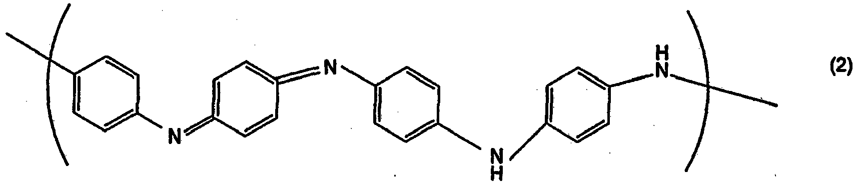

As the isocyanate compounds in the organic compound (B), there can be used polyisocyanates described already on the production of the urethane resin (A).
As the aldehyde compounds in the organic compound (B), polyvalent aldehydes are preferred, and there can be exemplified glyoxal, terephthalaldehyde, etc.
As the carboxylic acids in the organic compound (B), both monobasic carboxylic acids and polybasic carboxylic acids can be used, but polybasic carboxylic acids which are dibasic or more carboxylic acids are preferred, and there can be exemplified tartaric acid, oxalic acid, malic acid, citric acid, succinic acid, ascorbic acid, gluconic acid, etc.

The amino resin in the organic compound (B) is a resin obtained by addition condensing formaldehyde or an alcohol to an amine compound such as melamine, benzoguanamine or urea, and include urea resins, melamine resins, guanamine resins, etc.
The urethane prepolymer whose isocyanato groups are protected by addition reacting an alkali metal bisulfite thereto in the organic compound (B) is obtained by addition reacting an alkali metal bisulfite (sodium bisulfite, potassium bisulfite or the like) to an intermediate product obtained by condensation polymerizing a polyisocyanate (particularly diisocyanate) with a polyol (particularly diol) up to an extent, to protect the isocyanato groups. As the polyisocyanate and the polyol, the same ones as used in the production of the urethane resin (A) can be used.

When an organic phosphonic acid or a partial alkali metal or ammonium salt thereof or a partial ester thereof with an alkanol having 1 to 4 carbon atoms, an organic phosphinic acid, or a phosphoric ester of a polyol is used together with another organic compound (B) including a methylolated phenol or a condensate thereof, a carbodiimide resin, an epoxy resin (particularly, a bisphenol A or F-type epoxy resin or an epoxy resin wherein part or all of the glycidyl groups of the bisphenol A or F-type epoxy resin are modified) or a silane coupling agent, the corrosion resistance of a coating formed can further be enhanced compared with a case where each of them is used alone.

The mass ratio in terms of solid matter of an organic phosphonic acid or a partial alkali metal or ammonium salt thereof or a partial ester thereof with an alkanol having 1 to 4 carbon atoms, an organic phosphinic acid, or a phosphoric ester of a polyol to another organic compound (B) is preferably in the range of 1: 1,000 to 1:1, and more preferably in the range of 1 : 200 to 1 : 5. When the above mass ratio in terms of solid matter is in the range of 1 : 1,000 to 1 : 1, the effect of use in the above combination can be attained.

The compounding ratio (A)/(B) between the urethane resin (A) and the organic compound (B) in terms of solid matter is preferably in the range of 1,000/1 to 10/1 and more preferably in the range of 200/1 to 15/1. When (A)/(B) is larger than 1,000/1, there arises a tendency that the effect to compound the organic compound (B) is not recognized, and when (A)/(B) is smaller than 10/1, there arises a tendency that the characteristics of the urethane resin (A) are inhibited and the formability of the surface-treated metallic material is lowered.

The zirconium compound (C) compounded in the aqueous surface-treating agent of the invention crosslink reacts with a metallic material, polar groups existing in the urethane resin, specific functional groups in the case where they exist in the organic compound (B), etc. to enhance the corrosion resistance, chemical resistance and moisture resistance of a coating formed.

As the zirconium compound (C), there is no particular restriction, and there can be used carbonates, oxides, nitrates, sulfates, phosphates, halides, fluoro acids (salts), salts with organic acids, organic complex compounds, etc. of zirconium. Specifically, there can be mentioned basic zirconium carbonate, zirconium oxycarbonate, ammonium zirconium carbonate, sodium zirconium carbonate, potassium zirconium carbonate, ammonium zirconyl carbonate (NH₄)₂[Zr(CO₃)₂(OH)₂], zirconium oxide (IV) (zirconia), zirconium nitrate, zirconyl nitrate ZrO(NO₃)₂, zirconium sulfate (IV), zirconyl sulfate, zirconium oxyphosphate, zirconium pyrophosphate, zirconyl dihydrogenphosphate, zirconium fluoride, zirconium chloride, hexafluorozirconic acid H₂ZrF₆, ammonium hexafluorozirconate (NH₄)₂ Zrf₆, zirconium acetate (IV), zirconyl acetate, zirconium lactate, zirconium acetylacetonate Zr(OC(=CH₂)CH₂COCH₃)₄, etc. These can be anhydrides or possible hydrates. Among them, ammonium zirconium carbonate, potassium zirconium carbonate, zirconium acetate and zirconium lactate are further preferred. The above zirconium compound (C) can be used alone or in a combination of two or more.

The compounding ratio between the urethane resin (A) and the zirconium compound (C) in terms of the mass ratio of the solid matter of (A)/Zr atom is preferably in the range of 1,000/1 to 10/1 and more preferably in the range of 200/1 to 20/1. When the mass ratio of the solid matter of (A)/Zr atom is in the range of 1,000/1 to 10/1, the corrosion resistance, chemical resistance and moisture resistance of a coating formed can be enhanced.

The aqueous surface-treating agent of the invention can further contain a water soluble or water dispersible acrylic resin or a water dispersible fluorocarbon resin in such a range that the effect of the invention is not spoiled, for example, in the range of 1 to 30 % by mass in terms of solid matter based on the urethane resin (A).

The aqueous surface-treating agent of the invention can further contain, in such a range that the effect of the invention is not spoiled, a lubricant (e.g., molybdenum disulfide, graphite, a polyolefin wax, etc.), a pigment (e.g., phthalocyanines, carbon black, titanium dioxide, etc.), an antimicrobial, an antifoaming agent, a leveling agent, a thickener, an ingredient to inhibit deterioration of the resin ingredient(s) with heat, an ingredient to inhibit deterioration of the resin ingredient(s) with light (antioxidant, ultraviolet absorber, quencher, HALS or the like), etc.

The medium used in the aqueous surface-treating agent of the invention is usually water, but in order to improve the drying properties of a coating formed, or the like, a small amount (for example, 10 % by volume or less of the whole aqueous medium) of a water soluble organic solvent selected among alcohols, ketones and cellosolves can be used together with water.

The pH of the aqueous surface-treating agent of the invention is not particularly restricted, but is preferably in the range of 5 to 13 and more preferably in the range of 7 to 11. When the pH is less than 5 or more than 13, the aqueous surface-treating agent tends to be thickened (viscosity up) or gel to lower its stability. When it is necessary to adjust the pH, it is possible to add an alkaline ingredient such as ammonia, dimethylamine or triethylamine or an acidic ingredient such as acetic acid or phosphoric acid.

Description on indispensable ingredients and optional ingredients composing the aqueous surface-treating agent of the invention represents a state at the time of compounding, and even if any reaction occurs after the compounding, it does not mean deviation from the range of the invention.

The total solid matter concentration of the aqueous surface-treating agent of the invention is not particularly restricted so long as the effects of the invention are attained, but, usually, is preferably adjusted to the range of 1 to 40 % by mass and more preferably adjusted to the range of 5 to 30 % by mass.

The aqueous surface-treating agent of the invention can be produced by adding an urethane resin (A), an organic compound (B), a zirconium compound (C), and, if necessary, other optional ingredients to water as a dispersion medium and stirring them. There is no particular restriction on the order of addition of these ingredients.

Metallic materials to which the aqueous surface-treating agent of the invention is applied is not particularly restricted, but there can be mentioned as preferred metallic materials aluminum or aluminum alloy materials and aluminum-zinc alloy-plated steel materials. Specifically, there can be mentioned aluminum or aluminum alloy materials such as pure aluminum, magnesium-containing aluminum alloys, manganese-containing aluminum alloys and silicon-containing aluminum alloys; and aluminum-zinc alloy-plated steel materials containing 5 to 75 % by mass of aluminum in the plating layer. The plated steel materials can contain a slight amount of an element such as silicon, magnesium, cobalt or manganese. Namely, the effects of the aqueous surface-treating agent of the invention is most displayed on metallic materials wherein aluminum exists in a larger amount on the surface.

There is no particular restriction on pretreatment steps prior to treatment with the aqueous surface-treating agent of the invention, but, usually, prior to the present treatment, washing with an alkaline degreasing agent or an acidic degreasing agent is made or washing with hot water or washing with a solvent or the like is made in order to remove oils and soils adhering to the metallic material to be treated; and then, if necessary, surface adjustment with an acid, an alkali or the like is made. In the washing of the surface of the metallic material, it is preferred to make rinsing after the washing so that the amount of the washing agent remaining on the surface of the metallic material may be minimized,

Treatment with the aqueous surface-treating agent of the invention is carried out by applying the aqueous surface-treating agent and then drying it. There is no particular restriction on coating methods, and, for example, there can be adopted a usual coating method such as a roll coating method, a curtain flow coating method, a spraying method, an immersion method, a shower wringer method, an air knife method, a bar coating method or a brush coating method. There is no particular restriction also on the temperature of the treating liquid, but, since the solvent of the present treating agent is mainly water, the temperature of the treating liquid is preferably 0 to 60°C and more preferably 5 to 40°C.

There is no particular restriction also on drying methods after application of the aqueous surface-treating agent of the invention, and any of natural drying and forced drying can be adopted. When forced drying is made, the drying can be carried out using a heating apparatus such as an electric furnace, a hot air oven or an induction heater. The peak temperature of the metallic material is not particularly restricted, but is preferably 30 to 150°C and more preferably 40 to 120°C. The drying time in that case is not particularly restricted, but is preferably 1 second to 10 minutes and more preferably 5 seconds to 5 minutes.

The amount of a dry coating formed on the surface of a metallic material needs to be in the range of 0.5 to 3 g/m² and is preferably in the range of 1 to 3 g/m². When the coating amount is less than 0.5 g/m², coating of the metallic material does not come to be made sufficiently and there arises a possibility that formability and chemical resistance are lowered. On the other hand, when it is more than 3 g/m², the effect is saturated and not economical.

### EXAMPLES

The invention is further specifically described below together with its effects according to examples and comparative examples, but the invention is not restricted by these examples.

### (1) Preparation of aqueous surface-treating agents

Ingredients shown below were used in combinations and proportions shown in Table 2 to prepare aqueous surface-treating agents of Examples 1 to 36 and Comparative examples 1 to 9 shown in Table 2. Namely, an urethane resin (A), an organic compound (B) and a zirconium compound (C) were added in this order to deionized water, and then an adjustment was made with deionized water so that the solid matter concentration could be 30 % by mass.

### <Urethane resin (A)>

Urethane resins used have physical properties shown in Table 1.

**Table 1**

| | Tg (°C) | MFT (°C) | Acid value | Tensile strength (mPa) | Elongation (%) |
|---|---|---|---|---|---|
| A1 | 60 | 0 or less | 25 | 58 | 280 |
| A2 | 100 | 0 or less | 25 | 58 | 280 |
| A3 | 130 | 0 or less | 25 | 58 | 280 |
| A4 | 100 | 0 or less | 25 | 58 | 280 |
| A5 | 100 | 35 | 25 | 58 | 280 |
| A6 | 100 | 15 | 25 | 58 | 280 |
| A7 | 100 | 5 | 25 | 58 | 280 |
| A8 | 100 | 0 or less | 15 | 58 | 280 |
| A9 | 100 | 0 or less | 40 | 58 | 280 |
| A10 | 100 | 0 or less | 25 | 40 | 280 |
| A11 | 100 | 0 or less | 25 | 80 | 280 |
| A12 | 100 | 0 or less | 25 | 58 | 50 |
| A13 | 100 | 0 or less | 25 | 58 | 100 |
| A14 | 100 | 0 or less | 25 | 58 | 500 |
| A15 | 40 | 0 or less | 25 | 58 | 280 |
| A16 | -10 | 20 | 25 | 32 | 280 |
| A17 | 100 | 55 | 25 | 58 | 280 |

| | | | | | |
|---|---|---|---|---|---|
| Tg : Glass transition temperature NPT : Minimal film-forming temperature | | | | | |

### Methods for measuring physical properties of an urethane resin (A) and a resin coating

### (a) Glass transition temperature (Tg)

Glass transition temperature (Tg) was measured using a dynamic viscoelasticity-measuring apparatus (Rheolograph-Solid S made by Toyo Seiki Seisakusho, Ltd.).

### (b) Minimal film-forming temperature (MFT)

Minimal film-formmg temperature (MFT) was determined by measuring a temperature at which a film formed using an aqueous dispersion of an urethane resin (A) is softened. A minimal film-forming temperature-measuring apparatus (made by Sanyo Trading, Ltd.) was used as a measuring apparatus.

### (c) Acid value

An acid value was expressed as the mg number of potassium hydroxide needed per 1 g of the solid matter of a water dispersible urethane resin to neutralize the carboxylic acid contained in the urethane resin.

### (d) Tensile strength and elongation

### * Resin film preparation process

A film having a thickness of 150 µm was formed on a PP film.
Drying condition: 23°C × RH65% × 24 hours
Heat treatment: 108°C × 2 hours (removal of the solvent, etc.)

Then, the film formed was peeled from the PP film, and its tensile strength and elongation were measured using a tension tester.

### * Tension tester (AUTOGRAPH AGS-1KNG made by Shimadzu Corporation)

Tensile strength: Tensile strength (N/mm²) at the maximal point (fracture point) was measured.
Elongation: Elongation (%) at the maximal point (fracture point) was measured.

### <Organic compound (B)>

- B1: Methylolated phenol
- B2: Carbodiimide resin (carbodiimide equivalent 450)
- B3: Carbodiimide resin (carbodiimide equivalent 590)
- B4: Epoxy resin having bisphenol A as an unit in the skeleton (epoxy equivalent 173)
- B5: A resin obtained by modifying an epoxy resin having bisphenol A as an unit in the skeleton with 3-aminopropyltriethoxysilane (epoxy equivalent 1,000)
- B6: A resin obtained by modifying an epoxy resin having bisphenol A as an unit in the skeleton with metaphosphoric acid (epoxy equivalent 500)
- B7: Sodium bisulfite adduct of polyester-type urethane prepolymer
- B8: Sodium bisulfite adduct of polyether-type urethane prepolymer
- B9: Tetramethylolated melamine tetra-O-methyl ether
- B10: Guanidine carbonate
- B11: Tartaric acid
- B12: Oxalic acid
- B13: 3-Aminopropyltriethoxysilane
- B14: Vinyltrimethoxysilane
- B15: 3-Glycidyloxypropyltrimethoxysilane
- B16: Aminotri(methylenephosphonic acid)
- B17: 2-Phosphonobutane-1,2,4-tricarboxylic acid
- B18: Inositol hexaphosphate ester
- B19: 1-Hydroxyethane-1,1-diphosphonic acid

### <Zirconium compound (C)>

- C1: Potassium zirconium carbonate
- C2: Ammonium zirconium carbonate
- C3: Zirconium lactate
- C4: Zirconium acetylacetonate
- C5: Ammonium hexafluorozirconate

**Table 2**

| | Urethane resin (A) | | Organic compound (B) | | Zirconium compound (C) | |
|---|---|---|---|---|---|---|
| | Kind | Compounding amount | Kind | Compounding amount | Kind | Compounding amount |
| Example 1 | A1 | 100 | B1 | 1 | C1 | 1 |
| Example 2 | A2 | 100 | B1 | 1 | C2 | 1 |
| Example 3 | A3 | 100 | B1 | 1 | C3 | 1 |
| Example 4 | A4 | 100 | B1 | 1 | C4 | 1 |
| Example 5 | A5 | 100 | B1 | 1 | C5 | 1 |
| Example 6 | A6 | 100 | B1 | 1 | C1 | 1 |
| Example 7 | A7 | 100 | B1 | 1 | C2 | 1 |
| Example 8 | A8 | 100 | B1 | 1 | C3 | 1 |
| Example 9 | A9 | 100 | B1 | 1 | C4 | 1 |
| Example 10 | A10 | 100 | B1 | 1 | C5 | 1 |
| Example 11 | A11 | 100 | B1 | 1 | C1 | 1 |
| Example 12 | A12 | 100 | B1 | 1 | C2 | 1 |
| Example 13 | A13 | 100 | B1 | 1 | C3 | 1 |
| Example 14 | A14 | 100 | B1 | 1 | C4 | 1 |
| Example 15 | A2 | 100 | B2 | 1 | C1 | 1 |
| Example 16 | A2 | 100 | B3 | 1 | C2 | 1 |
| Example 17 | A2 | 100 | B4 | 5 | C3 | 1 |
| Example 18 | A2 | 100 | B5 | 5 | C1 | 1 |
| Example 19 | A2 | 100 | B6 | 5 | C2 | 1 |
| Exemple 20 | A2 | 100 | B7 | 5 | C3 | 1 |
| Ekample 21 | A2 | 100 | B8 | 5 | C1 | 1 |
| Example 22 | A2 | 100 | B9 | 5 | C2 | 1 |
| Example 23 | A2 | 100 | B10 | 5 | C3 | 1 |
| Example 24 | A2 | 100 | B11 | 1 | C1 | 1 |
| Example 25 | A2 | 100 | B12 | 1 | C2 | 1 |
| Example 26 | A2 | 100 | B13 | 2 | C3 | 1 |
| Example 27 | A2 | 100 | B14 | 2 | C1 | 1 |
| Example 28 | A2 | 100 | B15 | 2 | C2 | 1 |
| Example 29 | A2 | 100 | B16 | 0.5 | C3 | 1 |
| Example 30 | A2 | 100 | B17 | 0.5 | C1 | 1 |
| Example 31 | A2 | 100 | B18 | 0.5 | C2 | 1 |
| Example 32 | A2 | 100 | B19 | 0 5 | C3 | 1 |
| Example 33 | A2 | 100 | B1+B3 | 1+0.1 | C2 | 1 |
| Example 34 | A2 | 100 | B1+B11 | 1+0.1 | C2 | 1 |
| Example 35 | A2 | 100 | B5+B10 | 1+0.1 | C1 | 1 |
| Example 36 | A2 | 100 | B6+B9 | 1+0.1 | C2 | 1 |
| Example 37 | A2 | 100 | B13+B15 | 1+1 | C3 | 1 |
| Example 38 | A2 | 100 | B1 | 0.1 | C1 | 1 |
| Example 39 | A2 | 100 | B2 | 10 | C2 | 1 |
| Example 40 | A2 | 100 | B5 | 5 | C3 | 0.1 |
| Example 41 | A2 | 100 | B6 | 5 | C1 | 10 |
| Example 42 | A2 | 100 | B1+B16 | 5+0.1 | C2 | 1 |
| Example 43 | A2 | 100 | B5+B17 | 5+0.1 | C3 | 1 |
| Example 44 | A2 | 100 | B6+B18 | 5+0.1 | C2 | 1 |
| Example 45 | A2 | 100 | B15+B19 | 2+0.1 | C2 | 1 |
| Com. ex. 1 | A2 | 100 | - | - | C2 | 1 |
| Com. ex. 2 | A2 | 100 | B1 | 1 | - | - |
| Com. ex 3 | A15 | 100 | B1 | 1 | C2 | 1 |
| Com. ex. 4 | A16 | 100 | B1 | 1 | C2 | 1 |
| Com. ex. 5 | A17 | 100 | B1 | 1 | C2 | 1 |
| Com. ex. 6 | A15 | 100 | B15 | 5 | C2 | 1 |

| | | | | | | |
|---|---|---|---|---|---|---|
| Com. ex. : Comparative example | | | | | | |

### (2) Pretreatment and surface treatment with an aqueous surface-treating agent

### (a) Metallic sheet

GL: 55 % by mass aluminum-zinc alloy-plated steel sheet, sheet thickness 0.5 mm
GF: 5 % by mass aluminum-zinc alloy-plated steel sheet, sheet thickness 0.5 mm
AL: 4.5 % by mass magnesium-aluminum alloy sheet (A5182), sheet thickness 0.28 mm

### (b) Degreasing treatment

A clean surface state was obtained by alkali degreasing as a pretreatment of a metallic sheet. Specifically, Finecleaner N364S (made by Nihon Parkerizing Co., Ltd.) as a silicate-type alkaline degreasing agent was diluted with deionized water to a concentration of 2 % by mass, adjusted to a temperature of 60°C, and sprayed on the surface of the metallic sheet for 10 seconds. Then, the surface was washed with city water, wrung with a wringer roll and dried with heating at 50°C for 30 seconds.

### (c) Surface treatment

Each of the aqueous surface-treating agents of Examples 1 to 45 and Comparative examples 1 to 6 prepared above was applied onto the surface of a metallic sheet after the degreasing treatment controlling a wet adhering amount by changing the kind of bar coater so that a corresponding dry coating amount shown in Table 3 could be obtained. Then, drying was made so that the corresponding peak temperature of the sheet shown in Table 3 could be obtained.

### (3) Evaluation tests

The surface-treated metallic sheets prepared above were subjected to the following tests.

### (3)-1 Corrosion resistance

White rust formation area after salt spray for 500 hours according to JIS-Z-2371, salt spray test, was visually observed to make evaluation.

### Evaluation criterion: percentage of white rust formation area

⊚; less than 5 %
○; 5 % or more but less than 15 %
Δ; 15 % or more but less than 50 %
×; 50 % or more

### (3)-2 Alkali resistance

Each of the surface-treated metallic sheets was immersed in an aqueous sodium hydroxide solution in a concentration of 1 % by mass at 25°C for 5 hours, washed with deionized water and dried by a drier. The state of the treated sheet was visually observed to make evaluation.
Evaluation criterion: Degree of discoloration into black or brown
⊚; less than 5 %
○; 5 % or more but less than 15 %
Δ; 15 % or more but less than 50 %
×; 50 % or more

### (3)-3 Acid resistance

Each of the surface-treated metallic sheets was immersed in a hydrochloric acid in a concentration of 1 % by mass at 25°C for 24 hours, washed with deionized water and dried by a drier. The state of the treated sheet was visually observed to make evaluation.
Evaluation criterion: Degree of discoloration into black or brown
⊚; less than 5 %
○: 5 % or more but less than 15 %
Δ; 15 % or more but less than 50 %
×; 50 % or more

### (3)-4 Formability

Each of the surface-treated metallic sheets was subjected to a draw-bead test (Amsler test) shown below to be formed, and then, the state of the formed sheet was visually observed and evaluation was made according to the following evaluation criterion. Thereafter, the formed sheet was subjected to the same salt spray test as shown in the item (3)-1 for 240 hours and evaluation was made according to the same evaluation criterion as in the item (3)-1.

| | |
|---|---|
| Load for pressure welding | 0.25 t |
| Bead diameter | 3 mmR |
| Bead height | 2 mm |
| Drawing speed | 200 mm/minute |

Evaluation criterion: Degree of discoloration into black
⊚; less than 1 %
○; 1 % or more but less than 5 %
Δ; 5 % or more but less than 50 %
×; 50 % or more

### (3)-5 Moisture resistance

One pair of each of the surface-treated metallic sheets was stacked in such a state that the treated surfaces faced each other and a pressure of 4,900 kPa was applied, and subjected to a humidity cabinet test using a humidity cabinet tester (CT-3H made by Suga Test Instruments, Ltd.). The condition of the test is to allow the stacked sheets to stand at a temperature of 50°C and a relative humidity of 98 % or more for 1 week in the cabinet. Evaluation was conducted by visually observing the treated surfaces after the test.
Evaluation criterion: Degree of discoloration into black
⊚; less than 1 %
○; 1 % or more but less than 10 %
Δ; 10 % or more but less than 50 %
×; 50 % or more

### (4) Results of the evaluation tests

The results of the evaluation tests are shown in Table 3. From Table 3, it is seen that the metallic sheets having coatings formed using the surface-treating agents of the invention (Examples 1 to 45), respectively, show excellent results in all of corrosion resistance, formability, chemical resistance and moisture resistance. It is also seen that, among the examples, in Examples 42 to 45 where an organic phosphonic acid was used together with another organic compound (B), corrosion resistance is furthermore enhanced.

On the other hand, in Comparative example 1 where no organic compound (B) is compounded, in Comparative example 2 where no zirconium compound (C) is compounded and in Comparative examples 3 to 6 where the physical properties of the urethane resins (A) are out of the range prescribed in the present invention, at least one or mostly at least two of corrosion resistance, formability, chemical resistance and moisture resistance were inferior.

**Table 3**

| Aqueous surface-treating agent | Metallic sheet | Treatmen condition | | Performance of the coating | | | | | |
|---|---|---|---|---|---|---|---|---|---|
| | | Peak temperature of the sheet (°C) | Dry coating amount (g/m²) | Corrosion resistance | Chemical resistance | | Formability | | Moisture resistance |
| | | | | | Alkali resistance | Acid resistance | observation | Corrosion resistance | |
| Example 1 | GL | 80 | 1.5 | ○ | ⊚ | ⊚ | ○ | ○ | ⊚ |
| Example 2 | GL | 80 | 1.5 | ○ | ⊚ | ⊚ | ⊚ | ⊚ | ⊚ |
| Example 2 | GL | 150 | 0.5 | ○ | ○ | ○ | ○ | ○ | ○ |
| Example 2 | GL | 45 | 3 | ○ | ⊚ | ⊚ | ⊚ | ⊚ | ⊚ |
| Example 2 | GF | 80 | 1.5 | ○ | ⊚ | ⊚ | ⊚ | ⊚ | ○ |
| Example 2 | Al | 80 | 1.5 | ○ | ⊚ | ⊚ | ⊚ | ⊚ | ⊚ |
| Example 3 | GL | 80 | 1.5 | ○ | ⊚ | ⊚ | ⊚ | ⊚ | ⊚ |
| Example 4 | GL | 80 | 1.5 | ○ | ⊚ | ⊚ | ⊚ | ⊚ | ⊚ |
| Example 5 | GL | 80 | 1.5 | ○ | ⊚ | ⊚ | ○ | ○ | ⊚ |
| Example 6 | GL | 80 | 1.5 | ○ | ⊚ | ⊚ | ⊚ | ⊚ | ⊚ |
| Example 7 | GL | 80 | 1.5 | ○ | ⊚ | ⊚ | ⊚ | ⊚ | ⊚ |
| Example 8 | GL | 80 | 1.5 | ○ | ⊚ | ⊚ | ○ | ○ | ⊚ |
| Example 9 | GL | 80 | 1.5 | ○ | ○ | ○ | ○ | ⊚ | ○ |
| Example 10 | GL | 80 | 1.5 | ○ | ⊚ | ⊚ | ⊚ | ⊚ | ⊚ |
| Example 11 | GL | 80 | 1.5 | ○ | ⊚ | ⊚ | ○ | ○ | ⊚ |
| Example 12 | GL | 80 | 1.5 | ○ | ⊚ | ⊚ | ○ | ○ | ⊚ |
| Example 13 | GL | 80 | 1.5 | ○ | ⊚ | ⊚ | ⊚ | ⊚ | ⊚ |
| Example 14 | GL | 80 | 1.5 | ○ | ○ | ○ | ⊚ | ⊚ | ⊚ |
| Example 15 | GL | 80 | 1.5 | ○ | ⊚ | ⊚ | ⊚ | ⊚ | ⊚ |
| Example 16 | GL | 80 | 1.5 | ○ | ⊚ | ⊚ | ⊚ | ⊚ | ⊚ |
| Example 17 | GL | 80 | 1.5 | ○ | ⊚ | ⊚ | ⊚ | ⊚ | ⊚ |
| Example 18 | GL | 80 | 1.5 | ○ | ⊚ | ⊚ | ⊚ | ⊚ | ⊚ |
| Example 19 | GL | 80 | 1.5 | ○ | ⊚ | ⊚ | ⊚ | ⊚ | ⊚ |
| Example 20 | GL | 80 | 1.5 | ○ | ○ | ○ | ⊚ | ⊚ | ⊚ |
| Example 21 | GL | 80 | 1.5 | ○ | ○ | ○ | ⊚ | ⊚ | ○ |
| Example 22 | GL | 80 | 1.5 | ○ | ○ | ⊚ | ⊚ | ⊚ | ○ |
| Example 23 | GL | 80 | 1.5 | ○ | ○ | ⊚ | ⊚ | ⊚ | ⊚ |
| Example 24 | GL | 80 | 1.5 | ○ | ○ | ○ | ⊚ | ⊚ | ○ |
| Example 25 | GL | 80 | 1.5 | ○ | ○ | ○ | ⊚ | ⊚ | ○ |
| Example 26 | GL | 80 | 1.5 | ○ | ⊚ | ⊚ | ⊚ | ⊚ | ⊚ |
| Example 27 | GL | 80 | 1.5 | ○ | ⊚ | ⊚ | ⊚ | ⊚ | ⊚ |
| Example 28 | GL | 80 | 1.5 | ○ | ⊚ | ⊚ | ⊚ | ⊚ | ⊚ |
| Example 29 | GL | 80 | 1.5 | ○ | ⊚ | ⊚ | ⊚ | ⊚ | ⊚ |
| Example 30 | GL | 80 | 1.5 | ○ | ⊚ | ⊚ | ⊚ | ⊚ | ⊚ |
| Example 31 | GL | 80 | 1.5 | ○ | ⊚ | ⊚ | ⊚ | ⊚ | ⊚ |
| Example 32 | GL | 80 | 1.5 | ○ | ⊚ | ⊚ | ⊚ | ⊚ | ⊚ |
| Example 33 | GL | 80 | 1.5 | ○ | ⊚ | ⊚ | ⊚ | ⊚ | ⊚ |
| Example 34 | GL | 80 | 1.5 | ○ | ⊚ | ⊚ | ⊚ | ⊚ | ⊚ |
| Example 35 | GL | 80 | 1.5 | ○ | ⊚ | ⊚ | ⊚ | ⊚ | ⊚ |
| Example 36 | GL | 80 | 1.5 | ○ | ⊚ | ⊚ | ⊚ | ⊚ | ⊚ |
| Example 37 | GL | 80 | 1.5 | ○ | ⊚ | ⊚ | ⊚ | ⊚ | ⊚ |
| Example 38 | GL | 80 | 1.5 | ○ | ○ | ⊚ | ⊚ | ⊚ | ⊚ |
| Example 39 | GL | 80 | 1.5 | ○ | ⊚ | ⊚ | ⊚ | ⊚ | ⊚ |
| Example 40 | GL | 80 | 1.5 | ○ | ⊚ | ⊚ | ⊚ | ⊚ | ○ |
| Example 41 | GL | 80 | 1.5 | ○ | ⊚ | ⊚ | ○ | ○ | ⊚ |
| Example 42 | GL | 80 | 1.5 | ⊚ | ⊚ | ⊚ | ⊚ | ⊚ | ⊚ |
| Example 43 | GL | 80 | 1.5 | ⊚ | ⊚ | ⊚ | ⊚ | ⊚ | ⊚ |
| Example 44 | GL | 80 | 1.5 | ⊚ | ⊚ | ⊚ | ⊚ | ⊚ | ⊚ |
| Example 45 | GL | 80 | 1.5 | ⊚ | ⊚ | ⊚ | ⊚ | ⊚ | ⊚ |
| Com. ex. 1 | GL | 80 | 1.5 | Δ | Δ | Δ | ⊚ | ○ | ○ |
| Com. ex. 2 | GL | 80 | 1.5 | × | Δ | Δ | ○ | × | × |
| Com. ex. 3 | GL | 80 | 1.5 | ○ | Δ | Δ | Δ | Δ | × |
| Com. ex. 4 | GL | 80 | 1.5 | × | × | × | Δ | × | × |
| Com. ex. 6 | GL | 80 | 1.5 | ○ | ○ | ○ | Δ | × | ○ |
| Com. ex. 6 | GL | 80 | 1.5 | ○ | Δ | Δ | Δ | Δ | × |

| | | | | | | | | | |
|---|---|---|---|---|---|---|---|---|---|
| Com. ex. : Comparative example | | | | | | | | | |

## Claims

1. An aqueous surface-treating agent for metallic materials wherein (A) a water dispersible urethane resin having a glass transition temperature of more than 50°C and a minimal coating-forming temperature of 40°C or less; (B) at least one organic compound selected from methylolated phenols and their condensates, carbodiimide resins, epoxy resins, silane coupling agents, organic phosphonic acids and their partial alkali metal or ammonium salts or their partial esters with alkanols having 1 to 4 carbon atoms, organic phosphinic acids, phosphoric esters of polyols, amine compounds, isocyanate compounds, aldehyde compunds, carboxylic acids, amino resins and urethane prepolymers whose isocyanato groups are protected by addition reacting an alkali metal bisulfite thereto; and (C) a zirconium compound are compounded in water.

2. The aqueous surface-treating agent according to claim 1 wherein the acid value of the urethane resin (A) is in the range of 15 to 40, and, further, as physical properties of the resin as a coating, its tensile strength is 40 to 90 N/mm² and its elongation is 50 to 500 %

3. The aqueous surface-treating agent according to claim 1 or 2 wherein the organic compound (B) is at least one selected from methylolated phenols and their condensates and carbodiimide resins.

4. The aqueous surface-treating agent according to claim 3 wherein an organic phosphonic acid or a partial alkali metal or ammonium salt thereof or a partial ester thereof with an alkanol having 1 to 4 carbon atoms, an organic phosphinic acid, or a phosphoric ester of a polyol is compounded further as the organic compound (B).

5. The aqueous surface-treating agent according to claim 1 or 2 wherein the organic compound (B) is an epoxy resin, and the epoxy resin is an epoxy resin having bisphenol A or F as a unit of the skeleton, or an epoxy resin wherein part or all of the glycidyl groups are silane- modified or a phosphoric acid- modified.

6. The aqueous surface-treating agent according to claim 5 wherein an organic phosphonic acid or a partial alkali metal or ammonium salt thereof or a partial ester thereof with an alkanol having 1 to 4 carbon atoms, an organic phosphinic acid, or a phosphoric ester of a polyol is compounded further as the organic compound (B).

7. The aqueous surface-treating agent according to claim 1 or 2 wherein the organic compound (B) is a silane coupling agent.

8. The aqueous surface-treating agent according to claim 7 wherein an organic phosphonic acid or a partial alkali metal or ammonium salt thereof or a partial ester thereof with an alkanol having 1 to 4 carbon atoms, an organic phosphinic acid, or a phosphoric ester of a polyol is compounded further as the organic compound (B).

9. The aqueous surface-treating agent according to claim 1 or 2 wherein the organic compound (B) is an organic phosphonic acid or a partial alkali metal or ammonium salt thereof or a partial ester thereof with an alkanol having 1 to 4 carbon atoms, an organic phosphinic acid, or a phosphoric ester of a polyol.

10. The aqueous surface-treating agent according to any one of claims 1 to 9 wherein the compounding ratio between the urethane resin (A) and the organic compound (B) as (A)/(B) is in the range of 1,000/1 to 10/1 as a solid mass ratio, and the compounding ratio between the urethane resin (A) and the zirconium compound (C) as a mass ratio of the solid matter of (A)/Zr atom is in the range of 1,000/1 to 10/1.

11. A surface-coated metallic material obtained by applying the aqueous surface-treating agent according to any one of claims 1 to 10 onto at least one surface of a metallic material and drying it to form a coating of 0.5 to 3 g/m² as dry coating mass.

12. The surface-coated metallic material according to claim 11 wherein the metallic material is an aluminum material, an aluminum alloy material or an aluminum-zinc alloy-plated steel sheet.

## Patentansprüche

1. Wässriges Oberflächenbehandlungsmittel für metallische Materialien, wobei (A) ein wasserdispergierbares Urethanharz mit einer Glasübergangstemperatur von mehr als 50°C und einer beschichtungsbildenden Mindesttemperatur von 40°C oder weniger; (B) mindestens eine organische Verbindung, die ausgewählt ist aus methylolierten Phenolen und ihren Kondensaten, Carbodiimidharzen, Epoxidharzen, Silankopplungsmitteln, organischen Phosphonsäuren und ihren partiellen Alkalimetall- oder Ammoniumsalzen oder ihren Partialestern mit Alkanolen mit 1 bis 4 Kohlenstoffatomen, organischen Phosphinsäuren, Phosphorsäureestern von Polyolen, Aminverbindungen, Isocyanatverbindungen, Aldehydverbindungen, Carbonsäuren, Aminoharzen und Urethanprepolymeren, deren Isocyanatgruppen durch Anlagerung eines Alkalimetallbisulfits daran über eine Additionsreaktion geschützt sind; und (C) eine Zirconiumverbindung in Wasser compoundiert sind.

2. Wässriges Oberflächenbehandlungsmittel nach Anspruch 1, wobei der Säurewert des Urethanharzes (A) im Bereich von 15 bis 40 liegt und ferner, als physikalische Eigenschaften des Harzes als Beschichtung, seine Zugfestigkeit 40 bis 90 N/mm² beträgt und seine Dehnung 50 bis 500% beträgt.

3. Wässriges Oberflächenbehandlungsmittel nach Anspruch 1 oder 2, wobei die organische Verbindung (B) mindestens eine Verbindung ist, die aus methylolierten Phenolen und ihren Kondensaten sowie aus Carbodiimidharzen ausgewählt ist.

4. Wässriges Oberflächenbehandlungsmittel nach Anspruch 3, wobei eine organische Phosphonsäure oder ein partielles Alkalimetall oder Ammoniumsalz davon oder ein Partialester davon mit einem Alkanol mit 1 bis 4 Kohlenstoffatomen, einer organischen Phosphinsäure oder einem Phosphorsäureester eines Polyols ferner als organische Verbindung (B) compoundiert ist.

5. Wässriges Oberflächenbehandlungsmittel nach Anspruch 1 oder 2, wobei die organische Verbindung (B) ein Epoxidharz ist und das Epoxidharz ein Epoxidharz mit Bisphenol A oder F als Skeletteinheit ist oder ein Epoxidharz ist, bei dem die Glycidylgruppen ganz oder teilweise silanmodifiziert oder phosphorsäuremodifiziert sind.

6. Wässriges Oberflächenbehandlungsmittel nach Anspruch 5, wobei eine organische Phosphonsäure oder ein partielles Alkalimetall- oder Ammoniumsalz davon oder ein Partialester davon mit einem Alkanol mit 1 bis 4 Kohlenstoffatomen, einer organischen Phosphinsäure oder einem Phosphorsäureester eines Polyols ferner als organische Verbindung (B) compoundiert ist.

7. Wässriges Oberflächenbehandlungsmittel nach Anspruch 1 oder 2, wobei die organische Verbindung (B) ein Silankopplungsmittel ist.

8. Wässriges Oberflächenbehandlungsmittel nach Anspruch 7, wobei eine organische Phosphonsäure oder ein partielles Alkalimetall oder Ammoniumsalz davon oder ein Partialester davon mit einem Alkanol mit 1 bis 4 Kohlenstoffatomen, einer organischen Phosphinsäure oder einem Phosphorsäureester eines Polyols ferner als organische Verbindung (B) compoundiert ist.

9. Wässriges Oberflächenbehandlungsmittel nach Anspruch 1 oder 2, wobei die organische Verbindung (B) eine organische Phosphonsäure oder ein partielles Alkalimetall oder Ammoniumsalz davon oder ein Partialester davon mit einem Alkanol mit 1 bis 4 Kohlenstoffatomen, einer organischen Phosphinsäure oder einem Phosphorsäureester eines Polyols ist.

10. Wässriges Oberflächenbehandlungsmittel nach einem der Ansprüche 1 bis 9, wobei das Compoundierungsverhältnis zwischen dem Urethanharz (A) und der organischen Verbindung (B) als (A)/(B) im Bereich von 1000/1 bis 10/1 als Feststoff-Massenverhältnis liegt und das Compoundierungsverhältnis zwischen dem Urethanharz (A) und der Zirconiumverbindung (C) als Massenverhältnis des Feststoffs des (A)/Zr-Atoms im Bereich von 1000/1 bis 10/1 liegt.

11. Oberflächenbeschichtetes metallisches Material, das man erhält durch Aufbringen des wässrigen Oberflächenbehandlungsmittels nach einem der Ansprüche 1 bis 10 auf mindestens eine Oberfläche eines metallischen Materials und Trocknen desselben, um eine Beschichtung von 0,5 bis 3 g/m² als trockene Beschichtungsmasse zu bilden.

12. Oberflächenbeschichtetes metallisches Material nach Anspruch 11, wobei das metallische Material ein Aluminiummaterial, ein Aluminiumlegierungsmaterial oder ein mit einer Aluminium-Zink-Legierung überzogenes Stahlblech ist.

## Revendications

1. Agent aqueux de traitement de surface pour matériaux métalliques, dans lequel sont mis en composition, dans de l'eau,
A) une résine uréthane dispersable dans l'eau, dont la température de transition vitreuse est supérieure à 50 °C et la température minimale de formation de revêtement est égale ou inférieure à 40 °C,
B) au moins un composé organique choisi parmi les phénols hydroxy-méthylés et leurs produits de condensation, les résines carbodiimides, les résines époxy, les agents de couplage de type silane, les acides organiques phosphoniques et leurs sels partiels de métal alcalin ou d'ammonium ou leurs esters partiels formés avec des alcanols comportant de 1 à 4 atomes de carbone, les acides organiques phosphiniques, les esters phosphates de polyols, les composés de type amine, isocyanate ou aldéhyde, les acides carboxyliques, les résines aminoplastes, et les prépolymères uréthanes dont les groupes isocyanate ont été protégés par réaction d'addition sur eux d'un bisulfite de métal alcalin,
C) et un composé du zirconium.

2. Agent aqueux de traitement de surface, conforme à la revendication 1, dans lequel la résine uréthane (A) présente un indice d'acide qui vaut de 15 à 40, ainsi que, en tant que propriétés physiques de la résine à l'état de revêtement, une résistance à la traction valant de 40 à 90 N/mm² et un allongement valant de 50 à 500 %.

3. Agent aqueux de traitement de surface, conforme à la revendication 1 ou 2, dans lequel le composé organique (B) est choisi, au nombre d'au moins un, parmi les phénols hydroxy-méthylés et leurs produits de condensation, et les résines carbodiimides.

4. Agent aqueux de traitement de surface, conforme à la revendication 3, dans lequel il y a en outre en composition, en tant que composé organique (B), un acide organique phosphonique ou un sel partiel de métal alcalin ou d'ammonium d'un tel acide ou un ester partiel d'un tel acide et d'un alcanol comportant de 1 à 4 atomes de carbone, un acide organique phosphinique, ou un ester phosphate de polyol.

5. Agent aqueux de traitement de surface, conforme à la revendication 1 ou 2, dans lequel le composé organique (B) est une résine époxy, et cette résine époxy est une résine époxy comportant, en tant que motif de son squelette, un motif dérivé du bisphénol A ou du bisphénol F, ou une résine époxy dans laquelle tous les groupes glycidyle ou une partie d'entre eux ont été modifiés au moyen d'un silane ou d'un acide phosphorique.

6. Agent aqueux de traitement de surface, conforme à la revendication 5, dans lequel il y a en outre en composition, en tant que composé organique (B), un acide organique phosphonique ou un sel partiel de métal alcalin ou d'ammonium d'un tel acide ou un ester partiel d'un tel acide et d'un alcanol comportant de 1 à 4 atomes de carbone, un acide organique phosphinique, ou un ester phosphate de polyol.

7. Agent aqueux de traitement de surface, conforme à la revendication 1 ou 2, dans lequel le composé organique (B) est un agent de couplage de type silane.

8. Agent aqueux de traitement de surface, conforme à la revendication 7, dans lequel il y a en outre en composition, en tant que composé organique (B), un acide organique phosphonique ou un sel partiel de métal alcalin ou d'ammonium d'un tel acide ou un ester partiel d'un tel acide et d'un alcanol comportant de 1 à 4 atomes de carbone, un acide organique phosphinique, ou un ester phosphate de polyol.

9. Agent aqueux de traitement de surface, conforme à la revendication 1 ou 2, dans lequel le composé organique (B) est un acide organique phosphonique ou un sel partiel de métal alcalin ou d'ammonium d'un tel acide ou un ester partiel d'un tel acide et d'un alcanol comportant de 1 à 4 atomes de carbone, un acide organique phosphinique, ou un ester phosphate de polyol.

10. Agent aqueux de traitement de surface, conforme à l'une des revendications 1 à 9, dans lequel le rapport de composition (A)/(B) entre la résine uréthane (A) et le composé organique (B), en termes de rapport massique entre solides, se situe dans l'intervalle allant de 1000/1 à 10/1, et le rapport de composition entre la résine uréthane (A) et le composé de zirconium (C), en termes de rapport massique des matières solides du composant (A) aux atomes de zirconium, se situe dans l'intervalle allant de 1000/1 à 10/1.

11. Matériau métallique revêtu en surface, que l'on obtient en appliquant un agent aqueux de traitement de surface, conforme à l'une des revendications 1 à 10, sur au moins une surface d'un matériau métallique et en l'y faisant sécher, de manière à former un revêtement de 0,5 à 3 g/m², en termes de masse de revêtement sec.

12. Matériau métallique revêtu en surface, conforme à la revendication 11, lequel matériau métallique est un matériau en aluminium, un matériau en alliage d'aluminium, ou une tôle en acier revêtu d'un placage en alliage d'aluminium et de zinc.
